# EUROPEAN PATENT SPECIFICATION

(11) **EP 0 840 987 B1**
(45) Date of publication and mention of the grant of the patent: **25.10.2000**
(21) Application number: 96926394.6
(22) Date of filing: 23.07.1996
(51) Int. Cl.: H04Q 7/36

(54) **TELECOMMUNICATION SYSTEMS, METHOD**
TELEKOMMUNIKATIONSSYSTEME, VERFAHREN
SYSTEMES DE TELECOMMUNICATION, METHODE

(30) Priority: 24.07.1995 NL 1000875
(43) Date of publication of application: 13.05.1998
(73) Proprietor: Koninklijke KPN N.V., 9726 AE Groningen (NL)
(72) Inventor: HEKMAT, Ramin, NL-2324 LJ Leiden (NL)
(86) International application number: EP9603283
(87) International publication number: WO9704613

(56) References cited:
- EP-A- 0 302 455
- EP-A- 0 536 864
- US-A- 4 727 590
- US-A- 4 759 051

## Description

### A Background of the invention

The invention relates to a telecommunication system provided with at least one base station, situated within a cell, for wireless communication with a mobile station, said base station being surrounded by a number of repeater devices for wireless communication with a mobile station and for wireless communication with the base station.

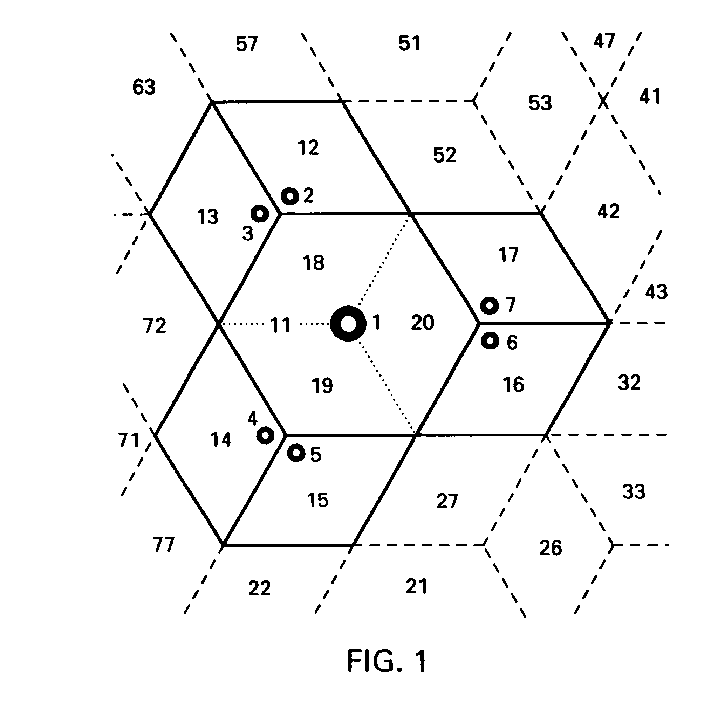

Such a telecommunication system is known from US 4,759,051 of which the first figure shows a telecommunication system with a cell, consisting of seven hexagonal sub-cells (20,22,24,26,28,30,32 in Fig. 1 of US 4,759,051). The base station (36 in Fig. 1 of US 4,759,051) is situated in the centre of the middle sub-cell and is surrounded by six repeaters which are situated in the centre of the other sub-cells. The base stations as well as the repeaters serve for wireless communication with a mobile station, each repeater further serving for wireless communication with the base station. By application of this prior art telecommunication system, a mobile station can do with less transmission power, which, for example, has a positive effect on its portability and its dimensions.

Such a telecommunication system has, inter alia, the disadvantage that it is composed in an inefficient manner.

### B Summary of the invention

The invention has the objective, inter alia, of providing a telecommunication system of the kind mentioned in the preamble, that is composed in a more efficient manner.

To this end, the telecommunication system according to the invention is characterised in that the cell consists of a first, a second and a third sub-cell, which are each substantially hexagonal and which are each substantially equilateral, a first side of the first sub-cell substantially coinciding with a first side of the second sub-cell, a second side of the first sub-cell, next to the first side of the first sub-cell, substantially coinciding with a first side of the third sub-cell, a second side of the second sub-cell, next to the first side of the second sub-cell, substantially coinciding with a second side of the third sub-cell, next to the first side of the third sub-cell, and which first and second side of the first sub-cell, first and second side of the second sub-cell and first and second side of the third sub-cell substantially possess one common point, where the base station is situated in the vicinity of the common point, and where, at a substantially central location in each sub-cell at least one repeater device is situated for wireless communication with a mobile station and for wireless communication with the base station.

By providing the cell with three sub-cells which are each substantially hexagonal and which are each substantially equilateral and which substantially possess one common point, a new cell structure is obtained. Like the prior art hexagonal cell structure, said new cell structure offers the possibility of dividing a certain area into contiguous cells, which of course is the consequence of the fact that the new cell structure consists of three hexagonal sub-cells. Because the base station is approximately situated in the vicinity of the common point, and a repeater device is situated in a substantially central location in each sub-cell, the telecommunication system according to the invention is composed in a very efficient manner.

Thus the problem of the inefficient composition of telecommunication systems is solved by the new cell structure consisting of hexagonal sub-cells, in which the base station is centrally situated in the cell and in which the repeater devices stations are centrally located in the sub-cells.

A first embodiment of the telecommunication system according to the invention is characterised in that at least one repeater device is provided with a first and a second antenna, where the first antenna is a directional antenna for wireless communication with the base station and where the second antenna is a sector antenna for wireless communication with a mobile station.

By preferably providing each repeater device with at least a first and a second antenna, where the first antenna is a directional antenna for wireless communication with the base station and where the second antenna is a sector antenna for wireless communication with a mobile station, the cell is divided into three sectors and a residual sector. If a mobile station is situated in one of the three sectors, communication with the base station will in general take place in an indirect manner via the repeater device concerned, while, if a mobile station is situated in the residual sector, communication with the base station will in general take place in a direct manner, and vice versa. A directional antenna is generally taken to mean an antenna with a relatively narrow beam, said relatively narrow beam having an angle of, for example, 1 to 30 degrees. A sector antenna is in general taken to mean an antenna with a relatively wide beam, said relatively wide beam having an angle of, for example, 30 to 300 degrees. In this case an antenna having a beam of more than 120 degrees is in general realised either by placing at least two sub-antennae adjacently to each other, or for example by placing an omnidirectional antenna opposite to a mast, in which case the dimensions of said mast and the distance between the omnidirectional antenna and the mast determine the angle of the relatively wide beam.

The second antenna preferably covers a sector of approximately 240 degrees, whereby a telecommunication system is obtained in which theoretically there is no longer any question of any overlap at all, which is very efficient.

A second embodiment of the telecommunication system according to the invention is characterised in that, in a substantially central location in each sub-cell, at least one further repeater device is situated for wireless communication with a mobile station and for wireless communication with a base station.

Because in a substantially central location in each sub-cell two repeater devices are situated, a telecommunication system is obtained which is very efficiently composed, since the loss of usable time slots as a result of the application of a first repeater device (which relays signals originating from the mobile station to the base station, and vice versa) is here compensated by the application of a second repeater device. Both repeater devices are in this case so-called alternating slot repeaters, for example.

A third embodiment of the telecommunication system according to the invention is characterised in that, at least one repeater device is provided with at least a first and a second antenna, where the first antenna is a directional antenna for wireless communication with the base station, and where the second antenna is a sector antenna for wireless communication with a mobile station, and that at least one further repeater device is provided with at least a third and a fourth antenna, where the third antenna is a directional antenna for wireless communication with the base station, and where the fourth antenna is a sector antenna for wireless communication with a mobile station. By preferably providing each repeater device with at least a first and a second antenna, where the first antenna is a directional antenna for wireless communication with the base station, and where the second antenna is a sector antenna for wireless communication with a mobile station, and by preferably providing each further repeater device with at least a third and a fourth antenna, where the third antenna is a directional antenna for wireless communication with the base station, and where the fourth antenna is a sector antenna for wireless communication with a mobile station, the cell is divided into six sectors and a residual sector. If a mobile station is located within one of the six sectors, communication with the base station will in general take place in an indirect manner via the repeater device concerned, while if the mobile station is situated in the residual sector, communication with the base station will in general take place in a direct manner, and vice versa. A directional antenna is generally taken to mean an antenna with a relatively narrow beam, said relatively narrow beam having an angle of, for example, 1 to 30 degrees. A sector antenna is in general taken to mean an antenna with a relatively wide beam, said relatively wide beam having an angle of, for example, 30 to 300 degrees. In this case an antenna having a beam of more than 120 degrees is in general realised either by placing at least two sub-antennae adjacently to each other, or for example by placing an omnidirectional antenna opposite to a mast, in which case the dimensions of said mast and the distance between the omnidirectional antenna and the mast determine the angle of the relatively wide beam.

Preferably, the second antenna and the fourth antenna each theoretically cover a sector of approximately 120 degrees in a non-overlapping manner, whereby a telecommunication system is obtained in which theoretically there is no longer any question of any overlap at all, which is very efficient.

The invention further relates to a further telecommunication system provided with at least one base station, situated in a cell, for wireless communication with a mobile station, said base station being surrounded by at least a first and a second repeater device, situated in the cell, for wireless communication with a mobile station and for wireless communication with the base station,

Such a further telecommunication system is known from US 4,759,051 of which the first figure shows a telecommunication system with a cell, consisting of seven hexagonal sub-cells (20,22,24,26,28,30,32 in Fig. 1 of US 4,759,051). The base station (36 in Fig. 1 of US 4,759,051) is situated in the centre of the middle sub-cell and is surrounded by six repeaters which are situated in the centre of the other sub-cells. The base stations as well as the repeaters serve for wireless communication with a mobile station, each repeater further serving for wireless communication with the base station. By application of this prior art telecommunication system, a mobile station can do with less transmission power, which, for example, has a positive effect on its portability and its dimensions.

Such a further telecommunication system has, inter alia, the disadvantage that if in this telecommunication system alternating slot repeaters, for example, were to be applied, it will function in an inefficient manner as a result of the loss of usable time slots by the application of repeater stations which each comprise a repeater device (which relays signals originating from the mobile station to the base station and vice versa).

The invention further has the objective of providing a further telecommunication system of the kind mentioned above which functions in a more efficient manner.

To this end, the further telecommunication system is characterised in that the first repeater device is equipped to use approximately a first half of the available time slots for communication with a mobile station and to use approximately the other half of the available time slots for communication with the base station and in that the second repeater device is equipped to use approximately the other half of the available time slots for communication with a mobile station and to use approximately the first half of the available time slots for communication with the base station.

The loss of usable time slots resulting from the application of the first repeater device (which relays signals originating from the mobile station to the base station, and vice versa) is compensated for by the application of the second repeater device. Both repeater devices are in this case so-called alternating slot repeaters, for example.

Thus the further problem of the inefficient functioning of the telecommunication system is solved by the application of two repeater devices situated at approximately the same locations.

It should be observed here that the term "cell" is taken to mean the coverage area of a base station, either in combination with or not in combination with repeaters. The invention is therefore not restricted to cellular telecommunication systems.

The invention relates yet further to a method for communicating with a mobile station in a wireless manner via at least one base station, situated in a cell, said base station being surrounded by at least a first and a second repeater device, situated in the cell, for wireless communication with a mobile station and for wireless communication with the base station, in which a communication with a mobile station is either established in a direct manner, via the base station, or established in an indirect manner, via one of the two repeater devices and the base station.

The method according to the invention is characterised in that the first repeater device uses approximately a first half of the available time slots for communication with a mobile station and uses approximately the other half of the available time slots for communication with the base station and in that the second repeater device uses approximately the other half of the available time slots for communication with a mobile station and uses approximately the first half of the available time slots for communication with the base station.

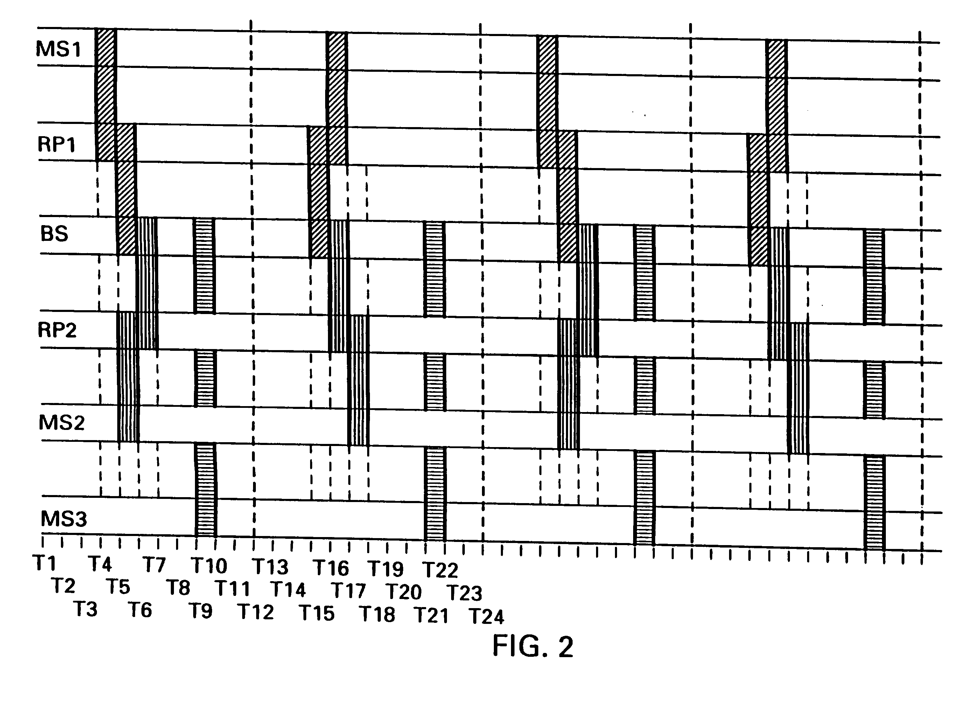

European Patent Application EP 0 536 864 discloses a telecommunication system, comprising cells (nrs. 204 in figure 2 of EP 0 536 864), which consist of seven hexagonal sub-cells (Nrs. 202 in figure 2 of EP 0 536 864). In the middle hexagonal sub-cell a base station is situated (nr. 222 in figure 13 of EP 0 536 864). At or near the centre of each further sub-cell a repeater device (nr. 220 in figure 13 of EP 0 536 864) is situated.

European Patent Application EP 0 302 455 discloses in figure 4 a cellular telecommunication system, in which the coverage of cells is extended by repeater devices (boosters).
- C: References
- ■: US 4,727,590
- ■: A new radio access strategy using a repeater in the DECT Radio Local Loop application, by L. Bonzano, R. De Benedittis, V. Palestini and G. Rosina, EUROpean Cooperation in the field of Scientific and Technical Research (EURO-COST 231 TD94), Praag, 12-15 April 1994
- ■: Mobile Antenna Systems Handbook, by K. Fujimoto and J.R. James, Artech House, Boston London, 1994, ISBN 0-89006-539-x
- ■: US 4,759,051
- ■: EP 0 536 864
- ■: EP 0 302 455
- D: Exemplary embodiment

The invention will be further explained on the basis of an exemplary embodiment shown in the figures. In this regard:

Fig. 1 shows a telecommunication system according to the invention which is provided with a cell consisting of three hexagonal and equilateral sub-cells and which is provided with a base station situated at the common point of the three sub-cells, and which per sub-cell is provided with a repeater station which is centrally situated in this sub-cell, in which each repeater station comprises a first and a second repeater device, and

Fig. 2 shows a time slot overview concerning the communication either taking place or not taking place via repeater devices between mobile stations which are situated in the cell, and the base station.

The telecommunication system represented in Fig. 1 comprises a first cell, which consists of three hexagonal and equilateral sub-cells. The first sub-cell is formed by three equilateral rhombic sectors 12, 13 and 18, the second sub-cell is formed by three equal rhombic sectors 14, 15 and 19, and the third sub-cell is formed by three equal rhombic sectors 16, 17 and 20. Thus a new cell structure is obtained in which the three rhombic sectors 18, 19 and 20 collectively form a hexagonal and equilateral residual sector 11, in which an approximately centrally located base station 1 is situated. This new cell structure further comprises the (first) sector 12 and the (second) sector 13, and the (third) sector 14 and the (fourth) sector 15, and the (fifth) sector 16 and the (sixth) sector 17. In sector 12, a repeater device 2 is situated, and in sector 13 a repeater device 3 is situated, which are situated in the vicinity of the centre of the first sub-cell. In sector 14, a repeater device 4 is situated, and in sector 15 a repeater device 5 is situated, which are situated in the vicinity of the centre of the second sub-cell. In sector 16, a repeater device 6 is situated and in sector 17 a repeater device 7 is situated, which are situated in the vicinity of the centre of the third sub-cell. The respective repeater devices 2, 3, 4, 5, 6 and 7 are each provided with a first antenna for communication with the base station 1 which is provided with at least one antenna, which with this at least one antenna substantially covers the residual sector 11, and which are each provided with a second antenna with which substantially the sectors 12, 13, 14, 15, 16 and 17 respectively are covered.

Of a second cell, the vertex of a residual sector 21 coincides with that vertex of sector 15 which does not coincide with the other sectors 14 and 16 and the residual sector 11 of the first cell. One side of a (first) sector 22 of the second cell borders on one side of sector 15, and a first and a second side of a (sixth) sector 27 of the second cell borders on another side of sector 15 and one side of sector 16 respectively. Of a (fifth) sector 26 of the second cell, one vertex coincides with that vertex of sector 16 which does not coincide with the other sectors 15 and 16 and the residual sector 11 of the first cell.

One side of a (first) sector 32 of a third cell borders on another side of sector 16, and, of a (second) sector 33 of the third cell, one vertex coincides with that vertex of sector 16 which does not coincide with the other sectors 15 and 16 and the residual sector 11 of the first cell.

One side of a (first) sector 42 of a fourth cell borders on one side of sector 17, and, of a (second) sector 43 of the fourth cell, one vertex coincides with those coinciding vertices of the sectors 16 and 17 which do not coincide with the residual sector 11 of the first cell.

Of a fifth cell, one vertex of a residual sector 51 coincides with that vertex of sector 12 which does not coincide with the other sectors 13 and 17 and the residual sector 11 of the first cell. A first and a second side of a (first) sector 52 of the fifth cell border on one side of sector 12 and another side of sector 17 respectively. Of a (second) sector 53 of the fifth cell, one vertex coincides with that vertex of sector 17 which does not coincide with the other sectors 12 and 16 and the residual sector 11 of the first cell. One side of a (sixth) sector 57 of the fifth cell borders on another side of sector 12.

Of a (first) sector 62 of a sixth cell, one vertex coincides with that vertex of sector 13 which does not coincide with the other sectors 12 and 14 and residual sector 11 of the first cell. One side of a (second) sector 63 of the sixth cell borders on one side of sector 13.

Of a seventh cell, one vertex of a residual sector 71 coincides with that vertex of sector 14 which does not coincide with the other sectors 13 and 15 and the residual sector 11 of the first cell. A first and a second side of a (first) sector 72 of the seventh cell border on another side of sector 13 and one side of sector 14 respectively. One side of a (sixth) sector 77 of the seventh cell borders on another side of sector 14.

Each first antenna is for example a directional antenna for wireless communication with base station 1, and each second antenna is for example a section antenna for wireless communication with a mobile station. If a mobile station is situated in one of the sectors 12, 13, 14, 15, 16 and 17 respectively, communication with base station 1 will in general take place in an indirect manner via the concerned repeater device 2, 3, 4, 5, 6 and 7 respectively, while, if a mobile station is situated in residual sector 11, communication with base station 1 will in general take place in a direct manner, and vice versa. A directional antenna is generally taken to mean an antenna with a relatively narrow beam, said relatively narrow beam having an angle of, for example, 1 to 30 degrees. A sector antenna is in general taken to mean an antenna with a relatively wide beam, said relatively wide beam having an angle of, for example, 30 to 300 degrees. In this regard, an antenna having a beam of more than 120 degrees is in general realised either by placing at least two sub-antennae adjacently to each other, or for example by placing an omnidirectional antenna near a mast, in which case the dimensions of said mast and the distance between the omnidirectional antenna and the mast determine the angle of the relatively wide beam. Each second antenna preferably has a beam of approximately 120 degrees, whereby theoretically each sector is accurately covered in a non-overlapping manner, which results in a telecommunication system in which theoretically there is no longer any question of any overlap at all, which is very efficient. The antenna of base station 1 is, for example, an omnidirectional antenna or comprises several (preferably three) sector antennae.

Communication between a mobile station situated in the first cell and base station 1 takes place as follows. If mobile station 1 is situated in residual sector 11 (or in one of the three sectors 18, 19 and 20), communication takes place in a direct manner, for example from the mobile station to base station 1 via a first frequency channel, and from base station 1 to the mobile station via a second frequency channel. On the other hand, if the mobile station is situated in sector 12, for example, communication takes place in an indirect manner via repeater device 2, for example from the mobile station to repeater device 2 via a third frequency channel and from repeater device 2 to base station 1 via a fourth frequency channel, and from base station 1 to repeater device 2 via a fifth frequency channel and from repeater device 2 to the mobile station via a sixth frequency channel.

Instead of two repeater devices 2 and 3, 4 and 5, and 6 en 7 respectively, per sub-cell, which each cover a sector 12 and 13, 14 and 15, and 16 and 17 respectively of each approximately 120 degrees, one repeater per sub-cell could be applied which covers both sectors 12 and 13, 14 and 15, and 16 and 17 respectively for a total of approximately 240 degrees.

The time slot overview represented in Fig. 2 shows the communication between a first mobile station MS1 via a first repeater RP1 and a base station BS, and shows the communication between a second mobile station MS2 via a second repeater RP2 and the base station BS, and shows the communication between a third mobile station MS3 and the base station BS.

It is generally known in the prior art, for example, to make twenty-four time slots, T1 up to and including T24, available per frame, of which the first twelve time slots T1 up to and including T12 are used for the so-called uplink (that is to say, for communication from mobile station to base station) and of which the next twelve time slots T13 up to and including T24 are used for the so-called downlink (that is to say, for communication from base station to mobile station). Both repeaters RP1 and RP2 are so-called alternating slot repeaters, known to those skilled in the art, which implies that a signal arriving at a repeater in a certain time slot is relayed by this repeater in the subsequent time slot. If the base station receives a signal originating directly from a mobile station during a certain time slot, the base station will generally return a signal to this mobile station twelve time slots later. If, on the other hand, the base station receives a signal originating from a mobile station indirectly via a repeater during a certain time slot, the base station will generally return a signal to this mobile station via the repeater ten time slots later. Thus the base station detects whether a signal originates directly from a mobile station or indirectly from a mobile station via a repeater, and in this regard takes into account the fact that signals transmitted via a repeater and signals to be transmitted via a repeater each, as it were, lose one time slot in the repeater.

In time slot T5, mobile station MS1 transmits a first signal, which is received in time slot T5 by repeater RP1, which in time slot T6 relays this first signal to base station BS, which receives this first signal in time slot T6. Base station BS detects that the first signal has arrived via a repeater (for example by the detection of flag added to the first signal), and in response hereto transmits a second signal to repeater RP1 in time slot T16, which is received by repeater RP1 in time slot T16, which relays this second signal to mobile station MS1 in time slot T17. Thus the communication between mobile station MS1 and base station BS takes place via repeater RP1, where repeater RP1 is set up in the manner known to those skilled in the art to use the uneven time slots, for example, for communication with a mobile station, and then to use even time slots for communication with the base station.

In time slot T6 mobile station MS2 transmits a third signal, which is received in time slot T6 by repeater RP2, which in time slot T7 relays this third signal to base station BS, which receives this third signal in time slot T7. Base station BS detects that the third signal has arrived via a repeater, and in response hereto transmits a fourth signal to repeater RP2 in time slot T17, which is received by repeater RP2 in time slot T17, which relays this fourth signal to mobile station MS2 in time slot T18. Thus the communication between mobile station MS2 and base station BS takes place via repeater RP2, where repeater RP2 is set up in the manner known to those skilled in the art to use the even time slots, for example, for communication with a mobile station, and then to use the uneven time slots for communication with the base station.

In time slot T10, mobile station MS3 transmits a fifth signal, which is received in time slot T10 by base station BS. Base station BS detects that the fifth signal has not arrived via a repeater, and in response hereto transmits a sixth signal to mobile station MS3 in time slot T22. Thus the communication between mobile station MS3 and base station BS takes place without further mediation by a repeater.

The use of one repeater, which is set up in a manner known to those skilled in the art to use approximately one half of the available time slots for communication with mobile stations and then to use the other half of the available time slots for communication with a base station, thus leads to the number of time slots which can be used for communication being halved. By applying, besides the repeater, a further repeater according to the invention, which further repeater is set up in a manner known to those skilled in the art to use the other half of the available time slots for communication with mobile stations and to use the other half of the available time slots for communication with a base station, the total number of time slots which can be used for communication remains available, which of course is very advantageous. In this regard, the sector of one of the two repeaters to be covered (within which sector a mobile station must in general be situated to allow communication with the base station via the repeater) must in general not coincide with the communication route between the other repeater and the base station, and vice versa.

## Claims

1. Telecommunication system provided with at least one base station (1), situated in a cell, for wireless communication with a mobile station, said base station (1) being surrounded by a number of repeater devices (2,4,6) for wireless communication with a mobile station, and for wireless communication with the base station (1), characterised in that the cell consists of a first sub-cell (12,13,18), a second sub-cell (14,15,19) and a third sub-cell (16,17,20), which are each substantially hexagonal and which are each substantially equilateral, a first side of the first sub-cell (12,13,18) substantially coinciding with a first side of the second sub-cell (14,15,19), a second side of the first sub-cell (12,13,18), next to the first side of the first sub-cell (12,13,18), substantially coinciding with a first side of the third sub-cell (16,17,20), a second side of the second sub-cell (14,15,19), next to the first side of the second sub-cell (14,15,19), substantially coinciding with a second side of the third sub-cell (16,17,20), next to the first side of the third sub-cell (16,17,20), and which first and second side of the first sub-cell (12,13,18), first and second side of the second sub-cell (14,15,19) and first and second side of the third sub-cell (16,17,20) substantially possess one common point, where the base station (1) is situated in the vicinity of the common point, and where, at a substantially central location in each sub-cell at least one repeater device (2,4,6) is situated for wireless communication with a mobile station and for wireless communication with the base station (1).

2. Telecommunication system according to Claim 1, characterised in that at least one repeater device (2,4,6) is provided with at least a first and a second antenna, where the first antenna is a directional antenna for wireless communication with the base station (1), and where the second antenna is a sector antenna for wireless communication with a mobile station.

3. Telecommunication system according to Claim 1, characterised in that in a substantially central location in each sub-cell at least one further repeater device (3,5,7) is situated for wireless communication with a mobile station and for wireless communication with the base statior (1).

4. Telecommunication system according to Claim 3, characterised in that at least one repeater device (2,4,6) is provided with at least a first and a second antenna, where the first antenna is a directional antenna for wireless communication with the base station (1), and where the second antenna is a sector antenna for wireless communication with a mobile station, and that at least one further repeater device (3,5,7) is provided with at least a third and a fourth antenna, where the third antenna is a directional antenna for wireless communication with the base station (1), and where the fourth antenna is a sector antenna for wireless communication with a mobile station.

5. Telecommunication system provided with at least one base station (BS), situated in a cell, for wireless communication with a mobile station (MS1,MS2), said base station (BS) being surrounded by at least a first and a second repeater device (RP1,RP2), situated in the cell, for wireless communication with a mobile station (MS1,MS2) and for wireless communication with the base station (BS), characterised in that the first repeater device (RP1) is equipped to use approximately a first half of the available time slots for communication with a mobile station (MS1,MS2) and to use approximately the other half of the available time slots for communication with the base station (BS) and in that the second repeater device (RP2) is equipped to use approximately the other half of the available time slots for communication with a mobile station (MS1,MS2) and to use approximately the first half of the available time slots for communication with the base station (BS).

6. Method for communicating with a mobile station (MS1,MS2) in a wireless manner via at least one base station (BS), situated in a cell, said base station (BS) being surrounded by at least a first and a second repeater device (RP1,RP2), situated in the cell, for wireless communication with a mobile station (MS1,MS2) and for wireless communication with the base station (BS), in which a communication with a mobile station (MS1,MS2) is either established in a direct manner, via the base station (BS), or established in an indirect manner, via one of the two repeater devices (RP1,RP2) and the base station (BS), characterised in that the first repeater device (RP1) uses approximately a first half of the available time slots for communication with a mobile station (MS1,MS2) and uses approximately the other half of the available time slots for communication with the base station (BS) and in that the second repeater device (RP2) uses approximately the other half of the available time slots for communication with a mobile station (MS1,MS2) and uses approximately the first half of the available time slots for communication with the base station (BS).

## Patentansprüche

1. Telekommunikationssystem, welches mindestens eine Basisstation (1) umfasst, welche innerhalb einer Zelle angeordnet ist, um drahtlose Kommunikation mit einer Mobilstation durchzuführen, wobei diese Basisstation (1) von einer Anzahl von Verstärkervorrichtungen (2, 4, 6) für die drahtlose Kommunikation mit einer Mobilstation umgeben ist und zur drahtlosen Kommunikation mit der Basisstation (1) umgeben ist, dadurch gekennzeichnet, dass die Zelle aus einer ersten Unterzelle (12, 13, 18), einer zweiten Unterzelle (14, 15, 19) und einer dritten Unterzelle (16, 17, 20) besteht, die jeweils im wesentlichen hexagonal sind und die im wesentlichen gleichseitig sind, dass eine erste Seite der ersten Unterzelle (12, 13 18) im wesentlichen mit einer ersten Seite der zweiten Unterzelle (14, 15, 19) zusammenfällt, dass eine zweite Seite der ersten Unterzelle (12, 13, 18), die zu der ersten Seite der ersten Unterzelle (12, 13, 18) benachbart ist, im wesentlichen mit einer ersten Seite der dritten Unterzelle (16, 17, 20) zusammenfällt, dass eine zweite Seite der zweiten Unterzelle (14, 15, 19), die der ersten Seite der zweiten Unterzelle (14, 15, 19) benachbart ist, im wesentlichen mit einer zweiten Seite der dritten Unterzelle (16, 17, 20) zusammenfällt, die benachbart zur ersten Seite der dritten Unterzelle (16, 17, 20) angeordnet ist, und dass die erste und die zweite Seite der ersten Unterzelle (12, 13, 18), die erste und die zweite Seite der zweiten Unterzelle (14, 15, 19) und die erste und die zweite Seite der dritten Unterzelle (16, 17, 20) im wesentlichen einen gemeinsamen Punkt aufweisen, dass die Basisstation (1) in der Umgebung dieses gemeinsamen Punktes angeordnet ist und wobei an einem im wesentlichen zentralen Ort in jeder Unterzelle mindestens eine Verstärkervorrichtung (2, 4, 6) zur drahtlosen Kommunikation mit einer Mobilstation und zur drahtlosen Kommunikation mit der Basisstation angeordnet ist.

2. Telekommunikationssystem nach Anspruch 1, dadurch gekennzeichnet, dass mindestens eine Verstärkervorrichtung (2, 4, 6) mit einer ersten und einer zweiten Antenne ausgestattet ist, wobei die erste Antenne eine gerichtete Antenne zur drahtlosen Kommunikation mit der Basisstation (1) ist und wobei die zweite Antenne eine Sektorantenne zur drahtlosen Kommunikation mit einer Mobilstation ist.

3. Telekommunikationssystem nach Anspruch 1, dadurch gekennzeichnet, dass an einem im wesentlichen zentralen Ort in jeder Unterzelle mindestens eine weitere Verstärkervorrichtung (3, 5, 7) zur drahtlosen Kommunikation mit einer Mobilstation und zur drahtlosen Kommunikation mit der Basisstation (1) angeordnet ist.

4. Telekommunikationssystem nach Anspruch 3, dadurch gekennzeichnet, dass mindestens eine Verstärkervorrichtung (2, 4, 6) mit mindestens einer ersten und einer zweiten Antenne versehen ist, wobei die erste Antenne eine Richtantenne zur drahtlosen Kommunikation mit der Basisstation (1) ist und wobei die zweite Antenne eine Sektorantenne zur drahtlosen Kommunikation mit einer Mobilstation ist, und dass mindestens eine weitere Verstärkervorrichtung (3, 5, 7) mit mindestens einer dritten und einer vierten Antenne versehen ist, wobei die dritte Antenne eine Richtantenne zur drahtlosen Kommunikation mit der Basisantenne (1) ist und wobei die vierte Antenne eine Sektorantenne zur drahtlosen Kommunikation mit einer Mobilstation ist.

5. Telekommunikationssystem mit mindestens einer Basisstation (BS), welche in einer Zelle angeordnet ist, zur drahtlosen Kommunikation mit einer Mobilstation (MS1, MS2), wobei die Basisstation (BS) von mindestens einer ersten und einer zweiten Verstärkervorrichtung (RP1. RP2), die in der Zelle angeordnet sind, zur drahtlosen Kommunikation mit einer Mobilstation und zur drahtlosen Kommunikation mit der Basisstation (BS) umgeben ist, dadurch gekennzeichnet, dass die erste Verstärkervorrichtung (RP1) ausgerüstet ist, um mindestens eine erste Hälfte der verfügbaren Zeitfenster zur Kommunikation mit einer Mobilstation (MS1, MS2) zu nutzen und um ungefähr die andere Hälfte der verfügbaren Zeitfenster zur Kommunikation mit der Basisstation (BS) zu nutzen, und dass eine zweite Verstärkervorrichtung (RP2) ausgerüstet ist, um die andere Hälfte der verfügbaren Zeitfenster zur Kommunikation mit einer Mobilstation (MS1, MS2) und die erste Hälfte der verfügbaren Zeitfenster zur Kommunikation mit der Basisstation (BS) zu nutzen.

6. Verfahren zur Kommunikation mit einer Mobilstation (MS1, MS2) in einer drahtlosen Art und Weise über mindestens eine Basisstation (BS), die in einer Zelle angeordnet ist, wobei die besagte Basisstation (BS) von mindestens einer ersten und einer zweiten Verstärkervorrichtung (RP1, RP2) umgeben ist, die in der Zelle angeordnet sind, um mit einer Mobilstation (MS1, MS2) in drahtloser Weise zu kommunizieren und um mit der Basisstation (BS) in drahtloser Weise zu kommunizieren, wobei die Kommunikation mit einer Mobilstation (MS1, MS2) entweder in direkter Weise über die Basisstation (BS) oder in indirekter Weise über eine der zwei Verstärkervorrichtungen (RP1, RP2) und der Basisstation (BS) ermöglicht wird, dadurch gekennzeichnet, dass die erste Verstärkervorrichtung (RP1) ungefähr eine erste Hälfte der verfügbaren Zeitfenster zur Kommunikation mit einer Mobilstation (MS1, MS2) einsetzt und ungefähr die andere Hälfte der verfügbaren Zeitfenster zur Kommunikation mit der Basisstation (BS) einsetzt, und dass die zweite Verstärkervorrichtung (RP2) ungefähr die andere Hälfte der verfügbaren Zeitfenster zur Kommunikation mit einer Mobilstation (MS1, MS2) und ungefähr die erste Hälfte der verfügbaren Zeitfenster zur Kommunikation mit der Basisstation (BS) einsetzt.

## Revendications

1. Système de télécommunications réalisé avec au moins une station de base (1), située dans une cellule, en vue d'une communication sans fil avec une station mobile, ladite station de base (1) étant entourée d'un certain nombre de dispositifs répéteurs (2, 4, 6) en vue d'une communication sans fil avec une station mobile, et en vue d'une communication sans fil avec la station de base (1), caractérisé en ce que la cellule est constituée d'une première sous-cellule (12, 13, 18), d'une seconde sous-cellule (14, 15, 19) et d'une troisième sous-cellule (16, 17, 20), qui sont chacune sensiblement hexagonales et qui sont chacune sensiblement équilatérales, un premier côté de la première sous-cellule (12, 13, 18) coïncidant sensiblement avec un premier côté de la seconde sous-cellule (14, 15, 19), un second côté de la première sous-cellule (12, 13, 18), à proximité du premier côté de la première sous-cellule (12, 13, 18), coïncidant sensiblement avec un premier côté de la troisième sous-cellule (16, 17, 20), un second côté de la seconde sous-cellule (14, 15, 19), à proximité du premier côté de la seconde sous-cellule (14, 15, 19), coïncidant sensiblement avec un second côté de la troisième sous-cellule (16, 17, 20), à proximité du premier côté de la troisième sous-cellule (16, 17, 20) et lesquels premier et second côtés de la première sous-cellule (12, 13, 18), premier et second côtés de la seconde sous-cellule (14, 15, 19) et premier et second côtés de la troisième sous-cellule (16, 17, 20) possèdent pratiquement un point commun, où la station de base (1) est située à proximité du point commun et où, à un emplacement sensiblement central dans chaque sous-cellule, au moins un dispositif répéteur (2, 4, 6) est situé en vue d'une communication sans fil avec une station mobile et en vue d'une communication sans fil avec la station de base (1).

2. Système de télécommunications selon la revendication 1, caractérisé en ce qu'au moins un dispositif répéteur (2, 4, 6) est muni d'au moins une première et une seconde antennes, où la première antenne est une antenne directive en vue d'une communication sans fil avec la station de base (1) et où la seconde antenne est une antenne à secteur en vue d'une communication sans fil avec une station mobile.

3. Système de télécommunications selon la revendication 1, caractérisé en ce que, à un emplacement sensiblement central dans chaque sous-cellule, au moins un autre dispositif répéteur (3, 5, 7) est situé en vue d'une communication sans fil avec une station mobile et en vue d'une communication sans fil avec la station de base (1).

4. Système de télécommunications selon la revendication 3, caractérisé en ce qu'au moins un dispositif répéteur (2, 4, 6) est muni d'au moins une première et une seconde antennes, où la première antenne est une antenne directive en vue d'une communication sans fil avec la station de base (1), et où la seconde antenne est une antenne à secteur en vue d'une communication sans fil avec une station mobile, et en ce qu'au moins un autre dispositif répéteur (3, 5, 7) est muni d'au moins une troisième et une quatrième antennes, où la troisième antenne est une antenne directive en vue d'une communication sans fil avec la station de base (1) et où la quatrième antenne est une antenne à secteur en vue d'une communication avec une station mobile.

5. Système de télécommunications muni d'au moins une station de base (BS), située dans une cellule, en vue d'une communication sans fil avec une station mobile (MS1, MS2), ladite station de base (BS) étant entourée d'au moins un premier et un second dispositifs répéteurs (RP1, RP2), situés dans la cellule, en vue d'une communications sans fil avec une station mobile (MS1, MS2) et en vue d'une communication sans fil avec la station de base (BS), caractérisé en ce que le premier dispositif répéteur (RP1) est équipé de façon à utiliser approximativement une première moitié des tranches de temps disponibles en vue d'une communication avec une station mobile (MS1, MS2) et utiliser approximativement l'autre moitié des tranches de temps disponibles en vue d'une communication avec la station de base (BS) et en ce que le second dispositif répéteur (RP2) est équipé de façon à utiliser approximativement l'autre moitié des tranches de temps disponibles en vue d'une communication avec une station mobile (MS1, MS2) et utiliser approximativement la première moitié des tranches de temps disponibles en vue d'une communication avec la station de base (BS).

6. Procédé de communications avec une station mobile (MS1, MS2) sans fil, par l'intermédiaire d'au moins une station de base (BS), située dans une cellule, ladite station de base (BS) étant entourée d'au moins un premier et un second dispositifs répéteurs (RP1, RP2), situés dans la cellule, en vue d'une communication sans fil avec une station mobile (MS1, MS2) et en vue d'une communication sans fil avec la station de base (BS), dans lequel une communication avec une station mobile (MS1, MS2) est soit établie d'une manière directe, par l'intermédiaire de la station de base (BS), soit établie d'une manière indirecte, par l'intermédiaire de l'un des deux dispositifs répéteurs (RP1, RP2) et la station de base (BS), caractérisé en ce que le premier dispositif répéteur (RP1) utilise approximativement une première moitié des tranches de temps disponibles en vue d'une communication avec une station mobile (MS1, MS2) et utilise approximativement l'autre moitié des tranches de temps disponibles en vue d'une communication avec la station de base (BS) et en ce que le second dispositif répéteur (RP2) utilise approximativement l'autre moitié des tranches de temps disponibles en vue d'une communication avec une station mobile (MS1, MS2) et utilise approximativement la première moitié des tranches de temps disponibles en vue d'une communication avec la station de base (BS).
